# EUROPEAN PATENT SPECIFICATION

(11) **EP 3 539 668 B1**
(45) Date of publication and mention of the grant of the patent: **03.12.2025**
(21) Application number: 19166738.5
(22) Date of filing: 19.07.2011
(51) Int. Cl.: B02C 13/04, B68G 1/00, B02C 13/284, B02C 18/18

(54) **SYSTEM FOR THE MANUFACTURE OF A PLASTICS FILLING MATERIAL**
SYSTEM ZUR HERSTELLUNG EINES KUNSTSTOFFFÜLLMATERIALS
SYSTÈME POUR LA FABRICATION D'UNE MATIÈRE PLASTIQUE DE REMPLISSAGE

(30) Priority: 11.08.2010 DK PA201000705
(43) Date of publication of application: 18.09.2019
(62) Divisional of application: 11737887.7
(73) Proprietor: Fossflakes A/S, 7800 Skive (DK)
(72) Inventor: FOSS, Adam, 2900 Hellerup (DK)
(74) Representative: Larsen & Birkeholm A/S

(56) References cited:
- WO-A2-00/07425
- DE-B- 1 010 823
- DE-B3- 10 313 370
- JP-A- 2003 001 128
- JP-A- H11 197 605
- US-A- 1 841 355
- US-A- 4 069 981
- US-A1- 2002 139 883
- US-A1- 2003 116 664
- ANONYMOUS: "Extend | Definition of Extend by Merriam-Webster", 21 April 2020 (2020-04-21), XP055687931, Retrieved from the Internet <URL:https://www.merriam-webster.com/dictionary/extend> [retrieved on 20200421]

## Description

### The prior art

The invention relates to a method of manufacturing a plastics filling material in the form of sheet elements of individual, thin pieces of sheet for use as a filling in pillows, duvets, jackets and the like, said sheet element being manufactured by separation of a web of sheet. Moreover, the invention relates to a system for performing the method.

Filling material of this type, comprising small sheet elements of wavy shape, is very suited as a filling in bedclothes, etc., since the material forms a filling mass which is suitably soft and resilient, and which has suitable insulating properties.

Previously known fillings are preferably manufactured by cutting up a layer of sheet material and deforming this material between for instance two rollers.

An example of such a manufacture of plastics sheet elements is known from DK/EP 0 476 012. The drawback of this method is that it is very slow, and that the manufacturing capacity is poor. To this should be added a relatively large consumption of energy, and the poor possibilities of switching the method to the generation of various element sizes and shapes.

An example of the manufacture of aluminum sheet elements is known from JP 60230921. This system comprises a housing in which a drum having loosely hanging hammers is rotated. The aluminum sheet is fed to the crusher via a funnel and is crushed between the hammers and a screen. Via the holes in the screen, the crushed sheet elements are sucked out via a suction line.

This system has a limited capacity, just as the manufactured aluminum filling material has a poor filling capacity.

The document JP 2003-1128 discloses a hammer crusher used to pulverize recycling waste in form of vinyl film. According to this document it is significant that the vinyl film is cut into pieces before the vinyl film is added to the hammer crusher as the vinyl film otherwise will be entangled around the rotational axis and the hammers (see paragraph [0009] and paragraph [0054]). According to the present invention the plastic film used as feed must be fed into the shredder as a web of sheet(s) in order to obtain the desired filling material and the apparatus disclosed in JP 2003-1128 is therefore not suitable for the manufacturing of this filling material.

### The object of the invention

It is the object of the invention to remedy these deficiencies and drawbacks, and this is achieved according to the invention by a method, in which a web of plastics sheet is fed to a shredder system in the form of a housing in which a drum having loosely hanging knives is rotated, said web of sheet extending in a space between the outermost path of the knives and an outer screen, said screen being provided with through holes/openings so that the pieces of sheet may be sucked out through the screen.

In this surprisingly simple manner, it is possible to manufacture an increased amount of filling material consisting of pieces of sheet having a heretofore unknown bent shape and thereby resilient property, thereby providing partly a great manufacturing capacity, partly a good "filling capacity" because of the very wavy elements. To this should be added the relatively great mutual distance between the individual elements and thereby the high degree of elasticity and insulating capacity. In practice, this filling has been found to be more comfortable than previously known sheet fillings.

Also achieved is an "arbitrary" wave shape of the individual elements, since the knives will attack the sheet from various directions and at various distances and thereby at various impact angles.

When e.g. several layers of sheet are fed at the same time, a multiplication of the manufacturing capacity will be achieved.

When e.g. use is made of a drum consisting of circular discs mounted on a shaft which constitutes a roller on which loosely hanging knives are mounted, these will be able serve as beaters and beat against the web of sheet for cutting as well as twisting, i.e. deformation, in many different directions.

When e.g. the web of sheet is fed as layers of sheet put together, the sheet elements may be dimensioned more easily, as the size and the shape of the individual elements may be changed by changing the feeding of the sheet.

When e.g. the screen is arranged on the lower side of the path of the drum, the sheet elements will accumulate there and will easily pass out through the holes in the screen.

Finally, when e.g. it is expedient to suck the elements out through the screen by means of vacuum, and, hereby, it will also be possible to sort out small particles, if any.

According to a first aspect of the invention, the invention relates to an apparatus for manufacturing a plastics filling material in the form of sheet elements (19) of individual, thin pieces of sheet for use as a filling in pillows, duvets and the like, the apparatus comprises means configured to feeding one or more web of sheet(s) (4) to a shredder system, wherein the shredder system comprises a housing (6) and a rotatable drum (9) comprising loosely hanging knives (12), means extending the web of sheet (4) inside a gap (13) between the outermost path of the knives (12) and an outer screen (8) provided with through holes or openings (14) so that the sheet elements (19) may be sucked out through the openings (14) in the screen (8).

According to any embodiment of the first aspect of the invention, the means configured to feeding one or more web of sheet(s) (4) to the shredder system may handle 1-3 layers.

According to any embodiment of the first aspect of the invention, the drum (9) may consist of a plurality of discs (18) being mounted on a driving shaft (10), where adjacent discs (18) provides a space, in which space a bearing (11) is mounted near the circumference of a disc (18), on which bearing (11) a chopper in the form of a knife (12) is mounted, said knife (12) protruding beyond the circumference of the discs (18) in the extended position.

According to any embodiment of the first aspect of the invention, the screen (8) may be mounted at a distance from the extended position of the knives (12) and extend below the drum (9).

According to any embodiment of the first aspect of the invention, the apparatus may comprise means for establishing a vacuum (15) on the outer side of the screen (8).

According to any embodiment of the first aspect of the invention, the apparatus may comprise means configured to feed either a single-layered or multi-layered web of sheets (4), which means comprises feeding rollers (5) feeding the single-layered or multi-layered web of sheets to the shredder system, a drum (9) mounted in the housing is being rotated on the driving shaft (10) by means of a motor, the discs (18) of the drum (9) may be circular, the bearing rods (11) may extend in parallel with the driving shaft (10), a knife (12) may be suspended in each space, and the knife is able to swing out and in between the discs (18) when the drum (9) is rotated, each knife (12) will serve as cutting and beating element corresponding to choppers during the rotation of the drum (9), a first guide plate (7) may be mounted around the top of the drum (9), a second guide plate (17) may be configured to guide the web of sheet (4) into the housing of the shredder system, the outer screen (8) may be mounted on the lower side of the drum (9), and the screen (8) may be curved creating the gap (13), the screen (8) is a plate and the through holes (14) have such a size that sheet elements (19) may pass through after having been formed when the knives (12) work the web of sheets (4) against the screen (8) and the openings (14), the knives (12) do not touch the screen (8) during movement, the apparatus may comprise a pump (16) which pump (16) is able to establish a vacuum in a space (15) below the screen 8.

### The drawing

An example of an embodiment of the invention will be described more fully below with reference to the drawing, in which
fig. 1 shows a section through a system for the manufacture of sheet elements seen in the direction I-I in fig. 3,
fig. 2 shows an enlarged section of part of a drum, working gap and screen,
fig. 3 shows a section through the system seen in the direction III-III in fig. 1, and
fig. 4 shows an enlarged sheet element according to the invention.

### Description of an exemplary embodiment

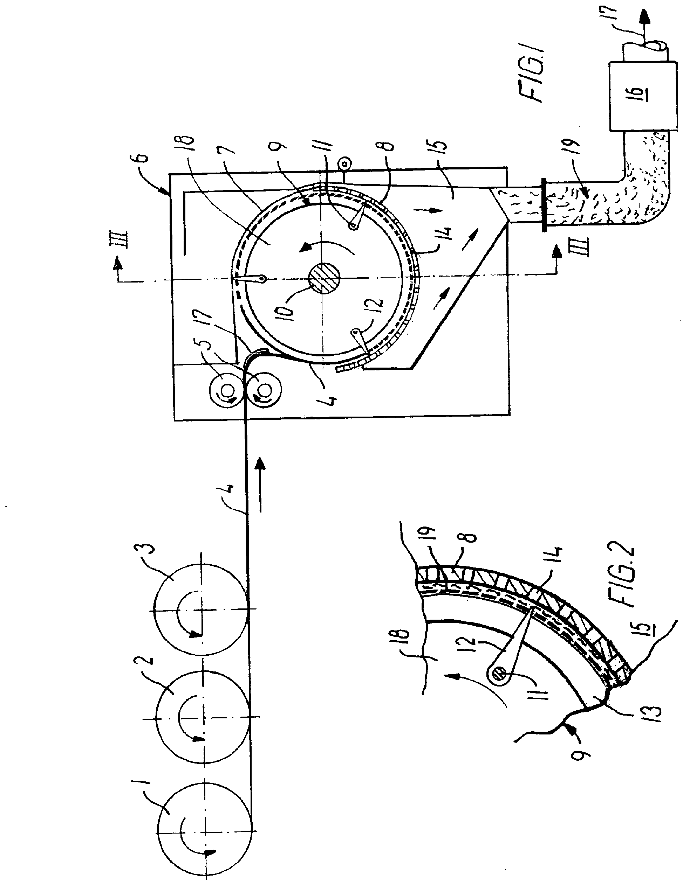

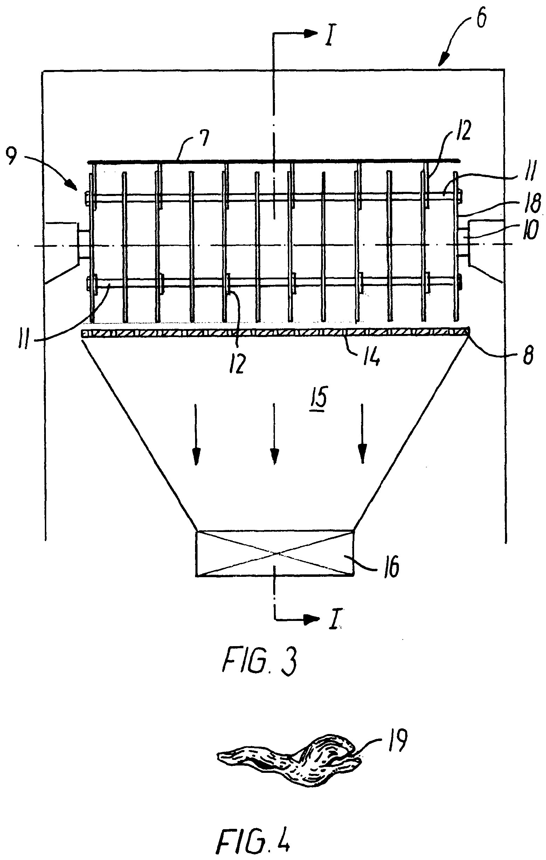

Figs. 1 - 3 show an example of a system for the manufacture of a filling material in the form of sheet elements, a single one of which is shown in fig. 4.

The sheet used is a generally known PE sheet with a thickness of about 12 - 18 µm. As shown in fig. 1, basically, rolled-up sheet may be suspended in a number from one roll and upwards. Three suspended rolls 1 - 3 are shown in the figure.

From there, a web of sheet 4 is rolled out, which is then either single-layered or multi-layered, and which is fed by feeding rollers 5 to a shredder system, which is incorporated in a housing 6 in the example shown.

A drum 9 is mounted in the housing, said drum being rotated on a shaft 10 by means of a motor (not shown).

The drum 9 is composed of circular discs 18, which are mounted on the shaft 10 with spaces between adjacent discs.

Bearing rods 11 are mounted near the circumference and extend in parallel with the shaft 10, but near the circumference of the discs. Fig. 1 shows three bearing rods 11, but there may be fewer or more.

A knife 12 is suspended in each space, said knife being able to swing out and in between the discs when the drum is rotated.

The individual knives 12 will serve as cutting and beating elements corresponding to choppers during the rotation of the drum 9.

The drum 9 has mounted therearound a guide plate or a shield 7 at the top, a plate for guiding the web of sheet 4 after the feeding plate which serves as a guide plate 17, while a screen 8 is mounted on the lower side of the drum, said screen being curved to create a gap 13, as shown in fig. 2.

The screen 8 is a plate in which holes or openings 14 are provided. These holes 14 have such a size that sheet elements 19 will be formed when the knives 12 work the sheet 4 against the screen 8 and the openings 14.

This working takes place in the gap 13 between the discs 18 of the drum and the screen 8, as will appear from fig. 2. It is noted that the knives 12 do not touch the screen 8 during the movement.

Below the screen 8, vacuum is established in the space 15 by means of a pump 16. This vacuum will draw the sheet elements 19 out through the openings 14 and move them further out via channels, etc. in the direction of the arrow 17.

Then, filtering of small particles, dust, etc. from the finished sheet elements 19 may take place in a generally known manner.

The method will be described now.

The drum 9 is caused to rotate at a suitable speed, which may be varied according to the dimensions of the sheet elements. Then, the feeding rollers 5, the web of sheet 4 are moved into the space 13 between the screen 8 and the knives 12 in their extended position.

The knives 12 will then work the sheet, as they will partly cut the sheet into small pieces, partly pull and twist these pieces to form a "curly" sheet element 19, as indicated in fig. 4.

The dimensions of a single element 19 may be about 10 - 20 mm on each side. Following this working, the elements 19 are sucked out through the openings 14 in the screen 8 and further on for possible filtration and packaging.

The method provides a considerable degree of adjustability to achieve the specific properties of the filling material.

For one thing, the sheet may be dimensioned, of course, and the number of sheet layers may be varied, but in addition the degree of feed, the speed of rotation of the drum and the size of the vacuum may be adjusted.

## Claims

1. An apparatus for manufacturing a plastics filling material in the form of sheet elements (19) of individual, thin pieces of sheet for use as a filling in pillows, duvets and the like, the apparatus comprises:
- means feeding one or more web of sheet(s) (4) to a shredder system, and
**characterized in that** the shredder system comprises
- - a housing (6) and a rotatable drum (9) comprising loosely hanging knives (12),
- - means extending the web of sheet (4) inside a gap (13) between the outermost path of the knives (12) and
- - an outer screen (8) provided with through holes or openings (14) so that the sheet elements (19) may be sucked out through the openings (14) in the screen (8).

2. An apparatus according to claim 1, **characterized in that** the means feeding one or more web of sheet(s) (4) to the shredder system may handle 1-3 layers.

3. An apparatus according to claims 1 and 2, **characterized in that** the drum (9) consists of a plurality of discs (18) being mounted on a driving shaft (10), where adjacent discs (18) provides a space, in which space a bearing (11) is mounted near the circumference of a disc (18), on which bearing (11) a chopper in the form of a knife (12) is mounted, said knife (12) protruding beyond the circumference of the discs (18) in the extended position.

4. An apparatus according to claim 3, **characterized in that** the screen (8) is mounted at a distance from the extended position of the knives (12) and extend below the drum (9).

5. An apparatus according to claim 3 or 4, **characterized in that** the apparatus comprises means for establishing a vacuum (15) on the outer side of the screen (8).

6. An apparatus according to claim 3, 4 or 5, comprising means to feed either a single-layered or multi-layered web of sheets (4), which means comprises feeding rollers (5) feeding the single-layered or multi-layered web of sheets to the shredder system, a drum (9) mounted in the housing is being rotated on the driving shaft (10) by means of a motor,
- the discs (18) of the drum (9) are circular,
- the bearing rods (11) extend in parallel with the driving shaft (10),
- a knife (12) is suspended in each space, and the knife is able to swing out and in between the discs (18) when the drum (9) is rotated, each knife (12) will serve as cutting and beating element corresponding to choppers during the rotation of the drum (9),
- a first guide plate (7) is mounted around the top of the drum (9),
- a second guide plate (17) guides the web of sheet (4) into the housing of the shredder system,
- the outer screen (8) is mounted on the lower side of the drum (9), and the screen (8) is curved creating the gap (13), the screen (8) is a plate and the through holes (14) have such a size that sheet elements (19) may pass through after having been formed when the knives (12) work the web of sheets (4) against the screen (8) and the openings (14), the knives (12) do not touch the screen (8) during movement,
- the apparatus comprises a pump (16) which pump (16) is able to establish a vacuum in a space (15) below the screen 8.

## Patentansprüche

1. Vorrichtung zum Herstellen eines Kunststofffüllmaterials in Form von Blattelementen (19) aus einzelnen, dünnen Blattstücken zur Verwendung als Füllung in Kissen, Bettdecken und dergleichen, wobei die Vorrichtung Folgendes umfasst:
- ein Mittel, das eine oder mehrere Blattbahnen (4) einem Shreddersystem zuführt, und
**dadurch gekennzeichnet, dass** das Shreddersystem Folgendes umfasst:
- ein Gehäuse (6) und eine drehbare Trommel (9), die lose hängende Messer (12) umfasst,
- ein Mittel, das die Blattbahn (4) innerhalb eines Spalts (13) zwischen dem äußersten Pfad der Messer (12) aufspannt, und
- ein äußeres Sieb (8), das mit Durchgangslöchern oder Öffnungen (14) bereitgestellt ist, so dass die Blattelemente (19) durch die Öffnungen (14) im Sieb (8) herausgesaugt werden können.

2. Vorrichtung nach Anspruch 1, **dadurch gekennzeichnet, dass** das Mittel, das eine oder mehrere Blattbahnen (4) dem Shreddersystem zuführt, 1-3 Lagen verarbeiten kann.

3. Vorrichtung nach einem der Ansprüche 1 und 2, **dadurch gekennzeichnet, dass** die Trommel (9) aus einer Vielzahl von Scheiben (18) besteht, die auf einer Antriebswelle (10) montiert sind, wobei benachbarte Scheiben (18) einen Raum bereitstellen, in dem ein Lager (11) in der Nähe des Umfangs einer Scheibe (18) montiert ist, wobei an dem Lager (11) ein Zerhacker in Form eines Messers (12) montiert ist, wobei das Messer (12) in der ausgefahrenen Position über den Umfang der Scheiben (18) hinausragt.

4. Vorrichtung nach Anspruch 3, **dadurch gekennzeichnet, dass** das Sieb (8) in einem Abstand von der ausgefahrenen Position der Messer (12) montiert ist und sich unterhalb der Trommel (9) erstreckt.

5. Vorrichtung nach Anspruch 3 oder 4, **dadurch gekennzeichnet, dass** die Vorrichtung ein Mittel zum Erzeugen eines Vakuums (15) an der Außenseite des Siebs (8) umfasst.

6. Vorrichtung nach Anspruch 3, 4 oder 5, umfassend ein Mittel, um entweder eine einlagige oder mehrlagige Blattbahn (4) zuzuführen, wobei das Mittel Zuführwalzen (5) umfasst, die die einlagige oder mehrlagige Blattbahn dem Shreddersystem zuführen, wobei eine im Gehäuse montierte Trommel (9) durch einen Motor auf der Antriebswelle (10) gedreht wird,
- wobei die Scheiben (18) der Trommel (9) kreisförmig sind,
- wobei sich die Lagerstangen (11) parallel zur Antriebswelle (10) erstrecken,
- wobei ein Messer (12) in jedem Raum aufgehängt ist und das Messer in der Lage ist, zwischen den Scheiben (18) aus- und einzuschwenken, wenn die Trommel (9) gedreht wird, wobei jedes Messer (12) während der Drehung der Trommel (9) als Schneide- und Schlagelement dient, das Zerhackern entspricht,
- wobei eine erste Führungsplatte (7) um die Oberseite der Trommel (9) montiert ist,
- wobei ein zweites Leitblech (17) die Blattbahn (4) in das Gehäuse des Shreddersystems führt,
- wobei das äußere Sieb (8) an der Unterseite der Trommel (9) montiert ist und das Sieb (8) gekrümmt ist, wodurch der Spalt (13) entsteht, wobei das Sieb (8) eine Platte ist und die Durchgangslöcher (14) eine solche Größe aufweisen, dass Blattelemente (19) hindurchgehen können, nachdem sie gebildet wurden, wenn die Messer (12) die Blattbahn (4) gegen das Sieb (8) und die Öffnungen (14) bearbeiten, wobei die Messer (12) das Sieb (8) während der Bewegung nicht berühren,
- wobei die Vorrichtung eine Pumpe (16) umfasst, wobei die Pumpe (16) in der Lage ist, in einem Raum (15) unterhalb des Siebes 8 ein Vakuum zu erzeugen.

## Revendications

1. Appareil pour la fabrication d'une matière plastique de remplissage sous forme d'éléments en feuilles (19) constitués de parties individuelles minces de feuille destinée à être utilisée comme remplissage d'oreillers, de couettes et d'autres articles similaires, l'appareil comprenant :
- un moyen d'alimentation d'une ou de plusieurs bandes de feuilles (4) vers un système déchiqueteur, et
**caractérisé en ce que** le système déchiqueteur comprend
- un boîtier (6) et un tambour rotatif (9) comprenant des couteaux suspendus librement (12),
- un moyen d'extension de la bande de feuille (4) à l'intérieur d'un espace (13) entre le trajet le plus à l'extérieur des couteaux (12) et
- un tamis externe (8) pourvu d'ouvertures ou de trous traversants (14) de sorte que les éléments en feuilles (19) puissent être aspirés hors des ouvertures (14) dans le tamis (8).

2. Appareil selon la revendication 1, **caractérisé en ce que** le moyen d'alimentation d'une ou de plusieurs bandes de feuilles (4) vers le système déchiqueteur peut traiter de 1 à 3 couches.

3. Appareil selon les revendications 1 et 2, **caractérisé en ce que** le tambour (9) est constitué d'une pluralité de disques (18) qui sont montés sur un arbre d'entraînement (10), dans lequel des disques adjacents (18) ménageant un espace, dans lequel un palier (11) est monté à proximité de la circonférence d'un disque (18), palier (11) sur lequel est monté un hacheur en forme de couteau (12), ledit couteau (12) faisant saillie au delà de la circonférence des disques (18) en position étendue.

4. Appareil selon la revendication 3, **caractérisé en ce que** le tamis (8) est monté à distance de la position étendue des couteaux (12) et s'étend en dessous du tambour (9).

5. Appareil selon la revendication 3 ou 4, **caractérisé en ce que** l'appareil comprend des moyens pour établir un vide (15) sur le côté externe du tamis (8).

6. Appareil selon la revendication 3, 4 ou 5, comprenant des moyens d'alimentation en une bande de feuilles (4) soit monocouche soit multicouches, lesdits moyens comprenant des rouleaux d'alimentation (5) alimentant le système déchiqueteur en une bande de feuilles monocouche ou multicouches, un tambour (9) monté dans le boîtier étant entraîné en rotation sur l'arbre d'entraînement (10) au moyen d'un moteur,
- les disques (18) du tambour (9) sont circulaires,
- les tiges de palier (11) s'étendent parallèlement à l'arbre d'entraînement (10),
- un couteau (12) est suspendu dans chaque espace, et le couteau est capable de pivoter vers l'extérieur et entre les disques (18) lorsque le tambour (9) est mis en rotation, chaque couteau (12) servira alors d'élément de découpe et de tassement correspondant aux hacheurs pendant la rotation du tambour (9),
- une première plaque de guidage (7) est montée autour de la partie supérieure du tambour (9),
- une seconde plaque de guidage (17) guide la bande de feuille (4) à l'intérieur du boîtier du système déchiqueteur,
- le tamis externe (8) est monté sur le côté inférieur du tambour (9), et le tamis (8) est recourbé créant ainsi l'espace (13), le tamis (8) est une plaque et les trous traversants (14) ont une taille telle que les éléments en feuilles (19) peuvent passer au travers après avoir été formés lorsque les couteaux (12) traitent la bande de feuilles (4) contre le tamis (8) et les ouvertures (14), les couteaux (12) ne touchent pas le tamis (8) pendant le mouvement,
- l'appareil comprend une pompe (16), laquelle pompe (16) est susceptible d'établir un vide dans un espace (15) sous le tamis 8.
